# EUROPÄISCHE PATENTSCHRIFT

(11) **EP 3 849 827 B1**
(45) Veröffentlichungstag und Bekanntmachung des Hinweises auf die Patenterteilung: **05.04.2023**
(21) Anmeldenummer: 19758941.9
(22) Anmeldetag: 21.08.2019
(51) Int. Cl.: B60D 1/64, B60D 1/01, B62D 53/12

(54) **VERBINDUNGSSYSTEM, KUPPLUNGSSYSTEM UND VERFAHREN ZUR VERBINDUNG EINES ZUGFAHRZEUGS MIT EINEM AUFLIEGER**
CONNECTION SYSTEM, COUPLING SYSTEM, AND METHOD FOR CONNECTING A TOWING VEHICLE TO A SEMI-TRAILER
SYSTÈME DE LIAISON, SYSTÈME DE COUPLAGE ET PROCÉDÉ DE LIAISON D'UN VÉHICULE DE TRACTION À UNE REMORQUE

(30) Priorität: 14.09.2018 DE 102018122577
(43) Veröffentlichungstag der Anmeldung: 21.07.2021
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2019/072349
(87) Internationale Veröffentlichungsnummer: WO 2020/052924

(56) Entgegenhaltungen:
- EP-A1- 2 112 008
- WO-A1-2018/051320
- JP-U- S58 181 604

## Beschreibung

Die vorliegende Erfindung betrifft ein Verbindungssystem, ein Kupplungssystem sowie ein Verfahren zur Verbindung eines Zugfahrzeuges mit einem Auflieger. Verbindungssysteme und Kupplungssysteme, welche mit solchen Verbindungssystemen ausgestattet sind, sind aus dem Stand der Technik bereits bekannt. Dabei werden insbesondere elektrische Energie und pneumatische oder hydraulische Energie zwischen einem Zugfahrzeug und einem am Zugfahrzeug festgelegten Anhänger, insbesondere einem Auflieger, ausgetauscht, wobei entsprechende Leitungssysteme und Steckersysteme vorhanden sind, um eine Verbindung der jeweiligen elektrischen und hydraulischen oder pneumatischen Leitungen des Zugfahrzeuges mit den jeweiligen entsprechenden Leitungen am Auflieger herstellen zu können. So wurde versucht im Bereich der Kupplungsplatte entsprechende Steckersysteme anzuordnen, welche während des Ankoppelvorganges des Aufliegers an dem Zugfahrzeug eine Verbindung zwischen elektrischen und pneumatischen oder hydraulischen Leitungen herstellen. Bei den bekannten Systemen hat es sich aber gezeigt, dass einzelne Komponenten des Verbindungssystems bei einem Fehlkoppelvorgang oder insbesondere bei einer Schrägstellung des Aufliegers zum Zugfahrzeug Schaden nehmen können, insbesondere dann, wenn ein Verkanten am Verbindungssytem stattfindet, welches durch die hohen, während des Kuppelvorgangs zwischen Zugfahrzeug und Anhänger wirkenden Kräfte verursacht sind. Darüber hinaus sind die aus dem Stand der Technik bekannten Verbindungsysteme sehr aufwändig und beanspruchen einen zu großen Bauraum im Bereich der Sattelkupplung.

Das Dokument JPS-58-181604 U zeigt eine automatische Verbindungsvorrichtung mit einem Aufliegerverbindungsabschnitt und einem Zugmaschinenverbindungsabschnitt. Der Aufliegerverbindungsabschnitt ist an einem Arm, der um einen Verbindungspin drehbar ist, angebracht. Der Aufliegerverbindungsabschnitt weißt Fluidleitungs-Verbindungsabschnitte und elektrische Verkabelungs-Verbindungsabschnitte auf. Der Zugmaschinenverbindungsabschnitt weist einen Unterrahmen auf, mit dem die Verbindungsvorrichtung an einer Kupplungsplatte befestigbar ist.

Das Dokument WO 2018/051320 A1 zeigt ein Verbindungssystem für Nutzfahrzeuge mit zwei Verbindern, die eine Zugmaschine mit einem Auflieger verbinden können. Aufgabe der vorliegenden Erfindung ist es, ein Verbindungssystem sowie ein Kupplungssystem und ein Verfahren zur Verbindung eines Zugfahrzeuges mit einem Auflieger bereitzustellen, welche diese Nachteile des Standes der Technik vermeidet. Diese Aufgabe wird gelöst mit einem Verbindungssystem gemäß Anspruch 1, einem Kupplungssystem gemäß Anspruch 11 und einem Verfahren zur Verbindung eines Zugfahrzeuges mit einem Auflieger gemäß Anspruch 13.

Erfindungsgemäß umfasst das Verbindungssystem für ein Nutzfahrzeug eine erste Steckereinheit und eine zweite Steckereinheit, wobei die erste Steckereinheit zur Festlegung an einem Rotor einer Aufliegereinheit, welcher um eine Drehachse drehbar an der Aufliegereinheit gelagert ist, ausgelegt ist, und einen ersten Koppelbereich aufweist, wobei der Rotor ein Drehteller der Aufliegereinheit ist, wobei die zweite Steckereinheit zumindest einen Befestigungsbereich zur Festlegung an einer Kupplungsplatte eines Nutzfahrzeuges und einem zweiten Kuppelbereich aufweist, wobei der erste und zweite Koppelbereich dafür ausgelegt sind, entlang einer Koppelachse miteinander gekoppelt zu werden, wobei die Koppelachse im Wesentlichen parallel zur Drehachse und beabstandet von der Drehachse verläuft, und wobei der erste Koppelbereich relativ zum Rotor und/oder der zweite Koppelbereich relativ zum Befestigungsbereich entlang der Koppelachse verlagerbar sind bzw. ist, um mit dem jeweils gegenüberliegenden Koppelbereich in oder außer Eingriff zu gelangen. Das Verbindungssystem umfasst somit zwei Steckereinheiten, von denen eine zur Festlegung am Auflieger und eine zur Festlegung am Zugfahrzeug, insbesondere der Kupplungsplatte der Sattelkupplung des Zugfahrzeuges, ausgelegt ist. Die erste Steckereinheit ist an einem Rotor einer Aufliegereinheit festgelegt, wobei der Rotor um eine Drehachse relativ zum Auflieger schwenkbar bzw. drehbar angeordnet ist. Der Rotor ist mit Vorteil ein Drehteller eines Aufliegers. Die Drehachse liegt dabei vorzugsweise mittig im Königszapfen der Aufliegereinheit, wobei der Rotor dazu dient, eine verschwenkte Position des Zugfahrzeuges relativ zum Auflieger ausgleichen zu können, in dem der Rotor sich um die Drehachse dreht und dabei die erste Steckereinheit der zweiten Steckereinheit derart gegenüberliegend anordnet, dass die Steckereinheiten entlang bzw. parallel zur Koppelachse miteinander verbunden werden können. Die Koppelachse ist dabei die Achse, entlang derer die beiden Steckereinheiten miteinander in Verbindung gebracht werden können. Mit anderen Worten ist die Koppelachse dabei die Achse, entlang welcher die Koppelbereiche aufeinander zu verlagert werden, um eine Verbindung herzustellen. Es ist im Rahmend er vorliegenden Erfindung vorgesehen, dass die Koppelachse im Wesentlichen parallel zur Drehachse verläuft und von dieser beabstandet ist. Im Wesentlichen parallel bedeutet im vorliegenden Fall, dass eine gedämpfte Lagerung, insbesondere durch Gummielemente oder entsprechende elastisch verformbare Bauteile der Koppelbereiche vorgesehen sein kann, welche zum einen Schwingungen ausgleichen können und abdämpfen können und zum anderen geringfügig verschwenkte oder verdrehte Anordnungen der beiden Steckereinheiten zueinander ausgleichen können. Als im Wesentlichen parallel wird im vorliegenden Fall eine um wenige Grad, insbesondere weniger als 5° verschwenkte Anordnung der Koppelachse zur Drehachse angesehen. Dies erlaubt auch im Betrieb des Verbindungssystemes, das heißt im zusammengekoppelten Zustand der Steckereinheiten, dass Schwingungen, welche während der Fahrt des Verbundes aus Zugfahrzeug und Auflieger auftreten, durch die gedämpfte Lagerung der Koppelbereiche ausgeglichen werden können. Als Koppelbereich der Steckereinheit ist insbesondere der Bereich der jeweiligen Steckereinheit definiert, in dem Kontaktstifte oder Kontaktelemente oder Rohrenden zur Herstellung einer elektrischen oder fluidischen Verbindung vorhanden sind. Mit Vorteil ist der Koppelbereich als einzelnes Bauteil ausgelegt, welches zum Rest der jeweiligen Steckereinheit verlagerbar sein kann und insbesondere als Steckerkopf ausgelegt ist. Zumindest einer der Koppelbereiche, also der erste Koppelbereich an der ersten Steckereinheit oder der zweite Koppelbereich, welcher an der zweiten Steckereinheit ausgebildet oder festgelegt ist, ist für eine Verlagerung längs einer Koppelachse ausgelegt. Es ist im Rahmen der vorliegenden Erfindung vorgesehen, dass zumindest einer der Koppelbereiche relativ zum Rotor bzw. relativ zum Befestigungsbereich entlang der Koppelachse verlagerbar ist, um mit dem jeweils gegenüberliegenden Koppelbereich in Eingriff zu gelangen. Der zweite Koppelbereich ist an einem Befestigungsbereich gelagert, wobei der Befestigungsbereich als Teil der Steckereinheit ausgelegt ist, welcher zur Festlegung an der Kupplungsplatte dient. Für den Fall, dass der zweite Koppelbereich entlang der Koppelachse verlagerbar ist, weist der Befestigungsbereich dabei eine Aufnahmegeometrie zur Führung des zweiten Koppelbereiches auf. Der Vorteil der vorliegenden Anordnung der Koppelbereiche derart, dass diese nur entlang der Koppelachse verlagert werden, um miteinander in Verbindung zu gelangen, wobei die Koppelachse parallel zur Drehachse ausgerichtet ist, liegt darin, dass nur eine eindimensionale translatorische Bewegung der Koppelbereiche relativ zueinander erfolgt, um diese in Eingriff miteinander zu bringen. Hierdurch sind besonders einfache und robuste Führungsmittel für den oder die verlagerbaren Koppelbereiche ausreichend, was die Robustheit des Steckersystems erhöht und den Bauraumbedarf senkt. So kann die zweite Steckereinheit vollständig unterhalb der Kupplungsplatte angeordnet werden, da diese relativ zur Kupplungsplatte bzw. zur Oberfläche bzw. Gleitfläche der Kupplungsplatte eine senkrechte Bewegung ausführt oder durch eine entsprechend korrespondierende Bewegung an der ersten Steckereinheit in Eingriff mit dieser gebracht werden kann. Weiterhin kann durch diese Anordnung der Verbindungsvorgang an den Steckereinheiten vom Ankopplungsvorgang des Zugfahrzeuges und des Aufliegers getrennt werden. Auf diese Weise kann erst eine vollständige Ankopplung des Aufliegers am Zugfahrzeug hergestellt werden, bevor das Verbindungssystem zusammengekoppelt wird, was insbesondere bei Fehlkupplungen eine Beschädigung des Verbindungssystems vermeidet.

Vorzugsweise lässt die Lagerung des ersten Koppelbereiches am Rotor und die Lagerung des zweiten Koppelbereiches am Befestigungsbereich im Wesentlichen keine Verlagerung quer zur Koppelachse zu. Dies bedeutet, dass die beiden Koppelbereiche jeweils nur entlang der Koppelachse geführt verlagerbar sind. Im Wesentlichen keine Verlagerung quer zur Koppelachse bedeutet im vorliegenden Zusammenhang, dass eine gedämpfte Lagerung mit Amplituden kleiner 1 cm im Rahmen der vorliegenden Erfindung noch als Lagerung ohne Querkomponenten zur Koppelachse angesehen sein soll. Auch kann eine rotatorische Bewegung des Koppelbereiches um die Koppelachse im Bereich weniger Grad, vorzugsweise maximal 10°, von der Lagerung der der Koppelbereiche zugelassen werden. Besonders bevorzugt sind/ist dabei der erste und/oder der zweite Koppelbereich mit einer Spielpassung an der jeweiligen Eingriffsgeometrie am Rotor oder am Befestigungsbereich festgelegt. Die bereits zuvor erwähnte gedämpfte Lagerung der Koppelbereiche erlaubt es, Schwingungen und leichte Fehlstellungen der Steckereinheiten zueinander auszugleichen.

Mit Vorteil weist die erste Steckereinheit eine Vielzahl von sich parallel zur Koppelachse erstreckende ersten Anschlüssen auf, wobei zumindest zwei erste elektrische Anschlüsse und zumindest zwei erste Fluidanschlüsse vorgesehen sind. Die elektrischen Anschlüsse und die Fluidanschlüsse an der ersten Steckereinheit sind dabei am Koppelbereich angeordnet und festgelegt und weisen vorzugsweise einen im Wesentlichen längs der Koppelachse unveränderlichen Querschnitt auf, was ein Zusammenschieben bzw. das Herstellen einer Überlappung der ersten Anschlüsse mit den jeweils korrespondierenden zweiten Anschlüssen an der zweiten Steckereinheit erlaubt. Da die elektrischen Anschlüsse und die Fluidanschlüsse jeweils nur für eine Kopplungsbewegung längs bzw. parallel zur Koppelachse ausgelegt sind, können diese sehr einfach gestaltet werden. Insbesondere bevorzugt kann für den Bereich, in welchem sich die Anschlüsse befinden, ein Standardbauteil verwendet werden, welches entsprechend am Koppelbereich festgelegt oder in diesen integriert ist.

Analog zu der Anordnung von ersten Anschlüssen an der ersten Steckereinheit weist auch die zweite Steckereinheit eine Vielzahl von sich parallel zur Koppelachse erstreckenden Anschlüssen auf, wobei zumindest zwei zweite elektrische Anschlüsse und zumindest zwei Fluidanschlüsse vorgesehen sind. Sowohl an der ersten als auch der zweiten Steckereinheit sind somit zumindest zwei elektrische Anschlüsse und zumindest zwei Fluidanschlüsse vorgesehen, welche jeweils miteinander in Verbindung gebracht werden können. Die zweiten Fluidanschlüsse sind dabei mit Vorteil als pneumatische oder hydraulische Druckkopplungen ausgelegt, in welchen eine fluiddichte Verbindung mit den jeweils gegenüberliegenden Fluidanschlüssen hergestellt werden kann.

Vorzugsweise greift am ersten Koppelbereich und/oder am zweiten Koppelbereich jeweils eine Hubeinheit an, welche ausgelegt ist, den jeweiligen Koppelbereich entlang der Koppelachse zu verlagern. In einer ersten bevorzugten Ausführungsform sind sowohl der erste Koppelbereich und der zweite Koppelbereich jeweils entlang der Koppelachse verlagerbar, wobei entsprechend jeweils eine Hubeinheit an jedem dieser beiden Koppelbereiche angreift und eine Kraft entlang der Koppelachse auf den jeweiligen Koppelbereich überträgt, um diesen in Richtung des gegenüberliegenden Koppelbereiches oder von diesem weg zu verlagern. Die Hubeinheit ist dabei mit Vorteil als pneumatischer oder hydraulischer Zylinder ausgelegt, was eine besonders kompakte Bauweise erreicht. In einer alternativ bevorzugten Ausführungsform kann die Hubeinheit als Gestänge bzw. als entsprechende mit Hebeleinheiten ausgestattete mechanische Komponente ausgebildet sein, welche durch einen elektrischen Motor angetrieben wird. Als Alternative zum elektrischen Motor ist es auch bevorzugt, die Hubeinheit mit dem Sicherungssystem, welches den Königszapfen in seiner im Aufnahmebereich der Kupplungsplatte festgelegten Position sichert, zu verbinden. Dabei ist es insbesondere möglich, dass die Hubeinheit eine entsprechende Kraft erzeugt, sobald der Sicherungsmechanismus des Königszapfens in der Kupplungsplatte vollständig geschlossen ist, wobei beispielsweise eine durch ein Rückstellelement angetriebene Stelleinheit ausgelöst werden kann, um eine Kraft auf den jeweils angeschlossenen Koppelbereich zu übertragen, welcher diesen entlang der Koppelachse verlagert.

Weiterhin bevorzugt ist der Befestigungsbereich der zweiten Steckereinheit als Stabilisierungselement, insbesondere als Blechteil ausgebildet und an der Kupplungsplatte stoffschlüssig und/oder formschlüssig festlegbar oder festgelegt. Der Festlegungsbereich der zweiten Steckereinheit erreicht insbesondere die richtige Positionierung des zweiten Koppelbereiches relativ zur Kupplungsplatte der Sattelkupplung. Hierfür weist der Befestigungsbereich insbesondere eine im Wesentlichen U-förmige Geometrie auf, welche an den seitlichen Schenkeln des U's jeweils die Beabstandung des Kopplungsbereiches von der Kupplungsplatte und insbesondere von dem Bereich, in welchen der Königszapfen in die Kupplungsplatte eintaucht, schafft. Besonders bevorzugt ist der Befestigungsbereich dabei als einfaches Blechteil ausgebildet, welches beispielsweise durch Umformen oder Abkanten hergestellt ist, was die Fertigungskosten deutlich reduziert und eine entsprechende Festigkeitssteigerung des Materials durch das Umformen erreicht. Dabei kann der Befestigungsbereich stoffschlüssig, beispielsweise durch Anschweißen und/oder formschlüssig, insbesondere durch Verschraubung oder Vernietung oder durch entsprechende Rücksprünge an der Kupplungsplatte und dem Befestigungselement an der Kupplungsplatte festgelegt sein. Es hat sich gezeigt, dass insbesondere eine demontierbare Festlegung des Befestigungsbereiches an der Kupplungsplatte die Wartung des Verbindungssystems erleichtert und trotzdem große Kräfte zwischen dem Verbindungssystem und der Kupplungsplatte übertragen kann und die Kupplungsplatte sogar lokal verstärken kann. In einer alternativen Ausführungsform kann der Befestigungsbereich einstückig an der Kupplungsplatte im Bereich des Aufnahmebereiches angeordnet sein, wobei in dieser Ausführungsform der Befestigungsbereich bevorzugt das so genannte Zugband der Kupplungsplatte, auch Brücke genannt, bildet.

Mit Vorteil weist der Befestigungsbereich eine als Aussparung ausgebildete Führung auf, in welcher der zweite Koppelbereich geführt und gegen Verlagerung quer zur Koppelachse gesichert ist. Insbesondere bevorzugt, für den Fall, dass der zweite Koppelbereich entlang der Koppelachse verlagerbar ausgelegt ist, ist die Führung des zweiten Koppelbereiches im Befestigungsbereich als Aussparung ausgebildet, in welche der zweite Koppelbereich eingeführt und gegen Verlagerung quer zur Koppelachse gesichert ist. Diese besonders einfache Ausgestaltung des Befestigungsbereiches erlaubt es, besonders platzsparend eine entlang der Koppelachse verlagerbare Lagerung des zweiten Koppelbereiches zu erreichen. Besonders bevorzugt ist dabei die als Aussparung ausgebildete Führung rechteckig geformt.

Weiterhin bevorzugt weist der erste Koppelbereich eine keilförmige Eingriffsgeometrie auf, welche zum Eingriff mit keilförmig zulaufenden Führungsflächen eines Aufnahmebereiches an der Kupplungsplatte ausgelegt ist, wobei die keilförmige Eingriffsgeometrie an einem einstückig mit dem ersten Koppelbereich ausgeführten Bauteil ausgebildet ist. Mit Vorteil ist der erste Koppelbereich integriert an dem Bauteil ausgeführt, welches an seiner Außenseite eine keilförmige Geometrie aufweist. Der Vorteil hierbei ist eine besonders kompakte Bauweise der ersten Steckereinheit, welche sowohl die korrekte Ausrichtung des Rotors beim Ankoppeln, als auch das sichere Verbinden mit der zweiten Steckereinheit auf geringem Bauraum ermöglicht. Dank der Anordnung eines ersten Steckerbereiches des ersten Koppelbereiches auf der vorzugsweise trapezförmigen Unterseite des ersten Koppelbereiches ist der erste Steckerbereich ausreichend von den Flächen beabstandet, welche mit der V-förmigen Eingriffsgeometrie der Sattelkupplungsplatte in Eingriff gelangen und an welchen Schmiermittel und Fremdkörper gehäuft auftreten.

Mit Vorteil sind die ersten Anschlüsse in einem ersten Steckerbereich gehalten sind, wobei der erste Steckerbereich in einer Aussparung am ersten Koppelbereich angeordnet ist, wobei der zweite Koppelbereich einen als Vorsprung ausgebildeten zweiten Steckerbereich aufweist, wobei im zusammengekoppelten Zustand der erste und der zweite Steckerbereich mit einer Überlappungslänge ineinander greifen, welche zumindest ein 0,3- bis 0,5-faches der größten Erstreckung der keilförmigen Eingriffsgeometrie parallel zur Koppelachse ist. Die Ausbildung des ersten Steckerbereiches als Aussparung schützt die Kontakte und Anschlusselemente gegen Umwelteinflüsse und insbesondere gegen seitliche Krafteinwirkung beim Ankuppeln. Weiterhin ist der an der Kupplungsplatte angeordnete zweite Koppelbereich mit einem als Vorsprung ausgebildeten zweiten Steckerbereich ausgestattet, welcher dafür ausgelegt ist mit einer Überlappungslänge in den ersten Steckerbereich einzugreifen. Der zweite Steckerbereich ist dafür ausgelegt, mit einer Spielpassung in den ersten Steckerbereich einzugreifen. Die Überlappungslänge ist dabei mit Vorteil ein ca. 0,3- bis 0,8-faches der Gesamterstreckung des ersten Koppelbereiches parallel zur Koppelachse und insbesondere zumindest halb so groß, wie die parallel zur Koppelachse gemessene Erstreckung der keilförmigen Eingriffsgeometrie. Die gewährleistet ein sicheres Verbinden der Steckerbereiche und schützt den Verbindungsbereich gegen Fremdkörper.

Bevorzugt weisen erste Steckerbereich und/oder der zweite Steckerbereich einem senkrecht zur Koppelachse geschnitten im Wesentlichen rechteckigen Querschnitt auf. Besonders bevorzugt erreicht der erste Koppelbereich eine Funktionsintegration, da zum einen die richtige Stellung des Rotors zur Kupplungsplatte über die keilförmige Eingriffsgeometrie am Koppelbereich erreicht werden kann und zum anderen der Steckerbereich einstückig mit dem Koppelbereich ausgebildet oder als Standardbauteil in den Koppelbereich formschlüssig festlegbar ist. Insbesondere lässt sich durch die Verbindung der keilförmigen Eingriffsgeometrie, welche die Ausrichtung des ersten Koppelbereiches relativ zur Kupplungsplatte und somit relativ zum zweiten Koppelbereich erreicht und durch die Verwendung von Standardbauteilen für die ersten Anschlüsse zum einen Bauraum sparen und zum anderen die Herstellungskosten für das Verbindungssystem gemäß der vorliegenden Erfindung senken. Bevorzugt weist der Koppelbereich eine innerhalb der keilförmigen Eingriffsgeometrie angeordnete Aussparung auf, in welche der zweite Steckerbereich eingesetzt und insbesondere formschlüssig festgelegt werden kann. Als im Wesentlichen rechteckiger Querschnitt ist im Rahmen der vorliegenden Erfindung eine insbesondere im Wesentlichen innerhalb eines Rechtecks angeordnete Verteilung der ersten Anschlüsse vorgesehen, wobei außerhalb des rechteckigen Querschnitts noch Festlegungsmittel, wie beispielsweise Nasen oder entsprechende korrespondierende Rücksprünge angeordnet sein können, welche von der Rechteckform abweichen.

Vorzugsweise ist das Kupplungssystem Teil eines ist ein Kupplungssystems, welches insbesondere zum Einsatz in einem Nutzfahrzeug ausgelegt ist, wobei dieses eine Kupplungsplatte und eine Aufliegereinheit aufweist, wobei die Kupplungsplatte einen Aufnahmebereich mit keilförmig zulaufenden Führungsflächen aufweist, wobei die Aufliegereinheit einen um eine Drehachse drehbar gelagerten Rotor aufweist, welcher eine exzentrisch zur Drehachse angeordnete Eingriffsgeometrie aufweist, wobei an der Eingriffsgeometrie oder beabstandet von der Eingriffsgeometrie am Rotor die wnw erste Steckereinheit festgelegt ist, wobei an der Kupplungsplatte benachbart zum und/oder angrenzend an den Aufnahmebereich die zweite Steckereinheit festgelegt ist.

Neben dem zuvor beschriebenen Verbindungssystem ist im Rahmen der vorliegenden Erfindung auch ein Kupplungssystem vorgesehen, wobei sich das Kupplungssystem insbesondere auf die Komponenten einer Sattelkupplung sowohl am Zugfahrzeug als auch am Auflieger bezieht und wobei in diese Sattelkupplung ein Verbindungssystem mit den zuvor beschriebenen Merkmalen integriert ist. Die Kupplungsplatte weist einen Aufnahmebereich mit keilförmig zulaufenden Führungsflächen auf, wie er aus dem Stand der Technik bekannt ist. Unmittelbar benachbart zum oder angrenzend an diesen Aufnahmebereich ist die zweite Steckereinheit festgelegt, wobei die zweite Steckereinheit vorzugsweise unterhalb der Kupplungsplatte und unterhalb des Aufnahmebereiches angeordnet und insbesondere über einen Befestigungsbereich an der Kupplungsplatte festgelegt ist. Die erste Steckereinheit und die zweite Steckereinheit weisen jeweils einen Koppelbereich auf, wobei zumindest einer der Koppelbereiche entlang einer Koppelachse verlagerbar ist. Die erste Steckereinheit ist dabei entweder selbst mit einer keilförmigen Eingriffsgeometrie ausgestattet, um durch den Aufnahmebereich der Kupplungsplatte entsprechend ausgerichtet zu werden. Alternativ bevorzugt ist der keilförmige Eingriffsbereich am Rotor beabstandet von der ersten Steckereinheit ausgebildet oder festgelegt, wobei erreicht werden kann, dass im Bereich der Steckereinheit keine großen Kräfte wirken, welche zu Schäden führen können. Insbesondere bevorzugt kann die keilförmige Eingriffsgeometrie ein aus dem Stand der Technik bekannter Lenkkeil zur Ansteuerung einer Nachlauflenkachse sein. Dieser Lenkkeil richtet den Rotor mit Vorteil relativ zur Kupplungsplatte derart aus, dass die erste Steckereinheit der zweiten Steckereinheit gegenüberliegend angeordnet ist. Die erste Steckereinheit kann in diesem Fall plan mit der Unterseite des Rotors ausgebildet sein, also nicht nach unten hervorragen, was die Gefahr von mechanischer Beschädigung der ersten Steckereinheit verringert. Wie zuvor beschrieben ist es von Vorteil, dass diese Koppelachse im Wesentlichen parallel zur Drehachse des Rotors am Auflieger steht, um eine besonders kompakte Bauweise des am Kupplungssystem festgelegten Verbindungssystems zu erreichen und somit den Bauraumbedarf des Kupplungssystems insgesamt zu reduzieren. Weiterhin bevorzugt kann durch die Anordnung insbesondere der zweiten Steckereinheit mit wenig Bauraumbedarf in unmittelbarer Nachbarschaft zum Aufnahmebereich der Kupplungsplatte dieser derart angeordnet sein, dass er gegen Umwelteinflüsse, insbesondere gegen aufgewirbelte Fremdkörper und Flüssigkeiten geschützt ist.

Mit Vorteil weist die zweite Steckereinheit einen Befestigungsbereich auf, welcher als Blechteil ausgebildet ist und an der Kupplungsplatte stoffschlüssig und/oder formschlüssig festgelegt ist, wobei der Befestigungsbereich den Aufnahmebereich derart überbrückt, dass er eine lokale Verstärkung der Kupplungsplatte bildet. Mit Vorteil ist der Befestigungsbereich dabei als im Wesentlichen U-förmiges Bauteil ausgebildet, welches unterhalb der Kupplungsplatte an diese derart festgelegt ist, dass er den Aufnahmebereich der Kupplungsplatte überbrückt, das heißt die beiden Flanken des Aufnahmebereiches miteinander verbindet und abstützt. In einer besonders bevorzugten Ausführungsform kann der Befestigungsbereich dabei auch einstückig mit der Kupplungsplatte ausgebildet sein und insbesondere bereits während eines Gussvorganges gemeinsam mit den übrigen Verstärkungsrippen der Kupplungsplatte hergestellt sein. In diesem Fall weist der einstückig mit der Kupplungsplatte ausgebildete Befestigungsbereich eine entsprechende Aussparung oder einen entsprechenden Führungsbereich zur Festlegung oder geführten Lagerung eines zweiten Koppelbereiches auf.

Erfindungsgemäß ist weiterhin ein Verfahren zur Verbindung eines Zugfahrzeuges mit einer Aufliegereinheit vorgesehen, wobei das Zugfahrzeug eine Kupplungsplatte aufweist, und die Aufliegereinheit einen um eine Drehachse drehbar gelagerten Rotor und einen Königszapfen aufweist, wobei der Rotor (42) ein Drehteller der Aufliegereinheit (4) ist, wobei am Rotor eine exzentrisch zur Drehachse angeordnete erste Steckereinheit ausgebildet oder festgelegt ist, wobei die Kupplungsplatte einen Aufnahmebereich mit keilförmig zulaufenden Führungsflächen und eine zweite Steckereinheit aufweist, umfassend die Schritte:
a) Verlagern der Aufliegereinheit quer zur Drehachse relativ zur Kupplungsplatte derart, dass der Königszapfen in den Aufnahmebereich eingeführt wird und der Rotor durch den Eingriff mit dem Aufnahmebereich um die Drehachse gedreht und ausgerichtet wird, wobei die erste Steckereinheit in eine Stellung der zweiten Steckereinheit gegenüberliegend geschwenkt wird;
b) Sichern des Königszapfens im Aufnahmebereich der Kupplungsplatte;
c) Zusammenkoppeln der ersten und der zweiten Steckereinheit durch Verlagern eines ersten Koppelbereiches der ersten Steckereinheit und/oder eines zweiten Koppelbereiches der zweiten Steckereinheit entlang einer im Wesentlichen parallel zur Drehachse stehenden Koppelachse in Richtung der jeweils gegenüberliegenden Steckereinheit;
d) Herstellen einer zumindest bereichsweisen Überlappung der Koppelbereiche miteinander längs der Koppelachse.

Entscheidender Vorteil des hier beschriebenen Verfahrens ist, dass zunächst ein Ankuppeln und Sichern der Aufliegereinheit am Zugfahrzeug, insbesondere an der Kupplungsplatte des Zugfahrzeuges, durchgeführt wird, wobei zum sichern des Zugfahrzeuges am Auflieger der Königszapfen im Aufnahmebereich der Kupplungsplatte gesichert wird, insbesondere durch einen Formschluss und entsprechende zusätzliche Sicherungsmittel. In diesem Zustand sind durch die Verschwenkung des Rotors an der Aufliegereinheit bereits die Koppelbereiche an der ersten Steckereinheit und der zweiten Steckereinheit derart zueinander ausgerichtet, dass eine gemeinsame Koppelachse vorhanden ist, entlang derer die Koppelbereiche aufeinander zu verlagert werden können, um schließlich in Eingriff zur Übertragung von elektrischer und fluidischer Energie gelangen zu können. Als letzter Verfahrensschritt ist entsprechend das Herstellen einer bereichsweisen Überlappung der Koppelbereiche längs der Koppelachse vorgesehen, durch welches eine elektrische Verbindung und eine entsprechend fluidische, insbesondere pneumatische oder hydraulische, Verbindung zwischen den jeweiligen Leitungen an der ersten Steckereinheit und an der zweiten Steckereinheit erreicht ist. Im Rahmen der vorliegenden Erfindung ist es bevorzugt vorgesehen, dass das Zusammenkoppeln der ersten und der zweiten Steckereinheit erst nach dem Sichern des Königszapfens zum Aufnahmebereich erfolgt. Hierdurch kann gewährleistet werden, dass bei Fehlkuppelmanövern oder bei Kupplung unter ungewöhnlichen Schrägstellungen der jeweiligen Kupplung am Zugfahrzeug und am Auflieger keine Beschädigung der Steckerkomponenten, insbesondere der Kopplungsbereiche der beiden Steckereinheiten stattfindet. Indem der Königszapfen zunächst im Aufnahmebereich gesichert ist, ist eine Querverlagerung der beiden Steckereinheiten zueinander ausgeschlossen und es kann ein sicherer und kontaktschonender und verschleißarmer Kopplungsvorgang zwischen den Koppelbereiche der Steckereinheiten durchgeführt werden.

Weitere Vorteile und Merkmale der vorliegenden Erfindung ergeben sich aus der nachfolgenden Beschreibung mit Bezug auf die beigefügten Figuren. Es zeigen:
- Fig. 1: eine Schnittansicht einer bevorzugten Ausführungsform eines erfindungsgemäßen Verbindungssystems in Schnittansicht,
- Fig. 2: eine perspektivische Ansicht der in Fig. 1 gezeigten Ausführungsform des erfindungsgemäßen Verbindungssystems,
- Fig. 3: eine Ansicht einer Kupplungsplatte mit Komponenten einer bevorzugten Ausführungsform des erfindungsgemäßen Verbindungssystems,
- Fig. 4: eine perspektivische Ansicht der in Fig. 3 gezeigten bevorzugten Ausführungsform des Kupplungssystems,
- Fig. 5: eine perspektivische Ansicht einer bevorzugten Ausführungsform einer Aufliegereinheit gemäß der vorliegenden Erfindung, und
- Fig. 6: eine Ansicht auf eine bevorzugte Ausführungsform eines Verbindungssystems.

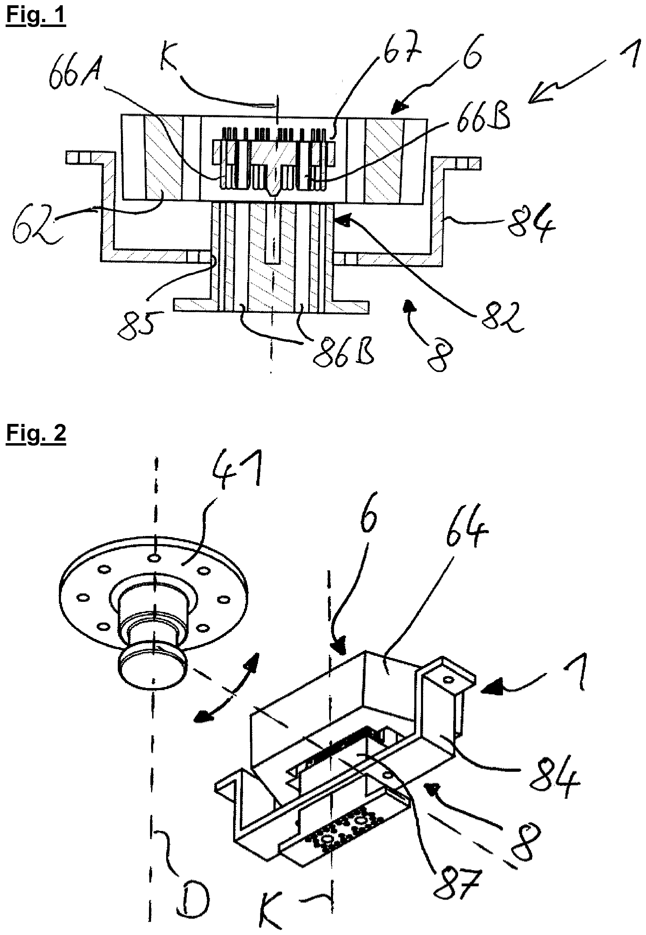

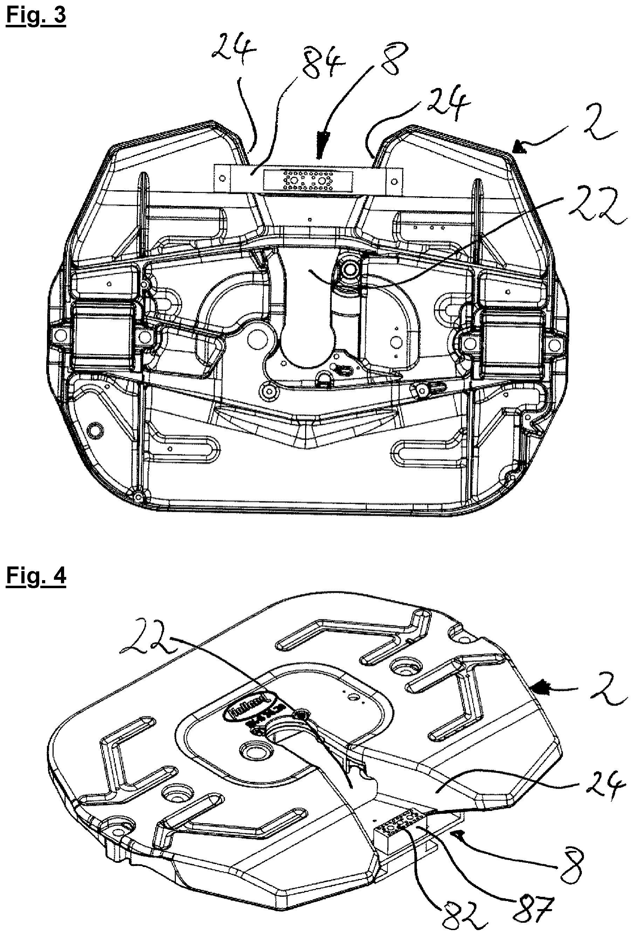

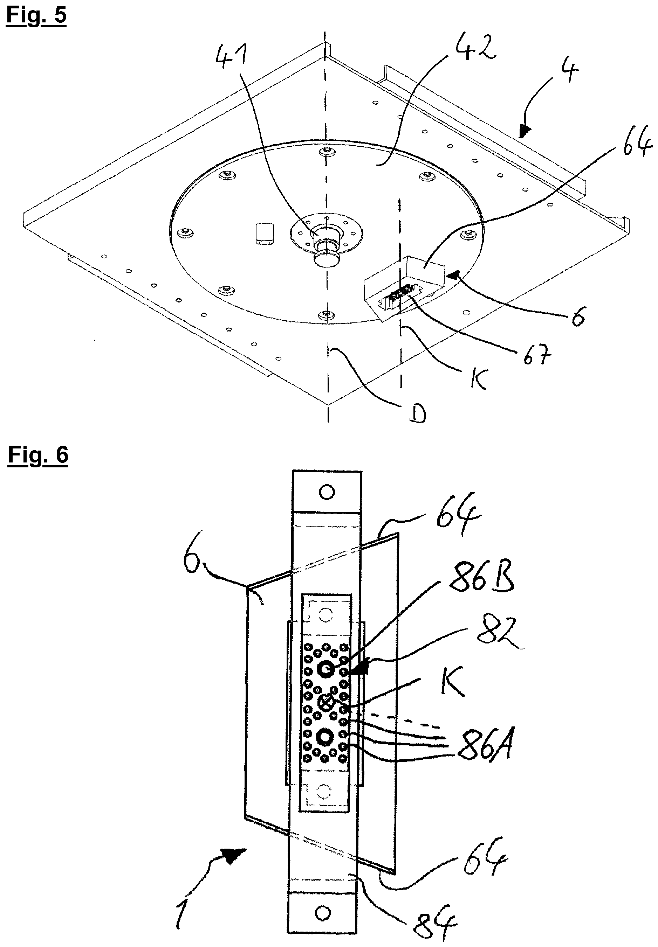

Bei der in Fig. 1 dargestellten Ausführungsform ist in geschnittener Ansicht ein Verbindungssystem 1 gezeigt, welches eine erste Steckereinheit 6 und eine zweite Steckereinheit 8 aufweist. Die erste Steckereinheit 6 ist dabei mit Vorteil zur Festlegung an einer Aufliegereinheit 4 (siehe Fig. 5) ausgelegt und weist erste elektrische Anschlüsse 66A und erste Fluidanschlüsse 66B auf. Die ersten Anschlüsse 66A, 66B sind dabei in einem Steckerbereich 67 angeordnet, wobei dieser Steckerbereich 67 mit Vorteil eine im Wesentlichen rechteckige Grundform aufweist. Weiterhin ist gezeigt, dass die zweite Steckereinheit 8 einen zweiten Koppelbereich 82 aufweist, und einen Befestigungsbereich 84, wobei der Koppelbereich 82 längs einer Koppelachse K relativ zum Befestigungsbereich 84 verlagerbar ist. Der Befestigungsbereich 84 weist eine als Aussparung ausgebildete Führung 85 auf, in welcher der zweite Koppelbereich 82 geführt ist. Die Führung 85 verhindert dabei eine Verlagerung des zweiten Koppelbereiches 82 quer zur Koppelachse K. Mit Vorteil ist der Befestigungsbereich 84 als U-förmiges Blechteil ausgebildet und weist an seinen in der Figur oben rechts und links gezeigten distalen Enden Befestigungsbereiche zur Festlegung an der Kupplungsplatte 2 (siehe Fig. 4) auf. In dieser bevorzugten Ausführungsform ist der Befestigungsbereich 84 mit Flanschabschnitten zur Herstellung einer Schraubverbindung mit der Kupplungsplatte 2 ausgebildet. Weiterhin bevorzugt ist der Befestigungsbereich 84 als U-förmiges Bauteil ausgebildet, um durch Abstützung in den Flanschabschnitten an der Kupplungsplatte 2 eine ausreichende Beabstandung des zweiten Koppelbereiches 82 vom ersten Koppelbereich 62 der ersten Steckereinheit 6 zu erreichen.

Fig. 2 zeigt die in Fig. 1 gezeigte Ausführungsform nochmals in perspektivischer Ansicht, wobei zusätzlich zu dem Verbindungssystem 1 noch der Königszapfen 41 der Aufliegereinheit 4 gezeigt ist. Mittig durch den Königszapfen 41 verläuft dabei die Drehachse D, zu welcher parallel versetzt die Koppelachse K angeordnet ist. Mit den einer Verbindungsgeraden zwischen der Drehachse D und der Koppelachse K dargestellten Pfeilen ist angedeutet, wie die erste Steckereinheit 6 gemeinsam mit dem Rotor 42 um die Drehachse D schwenkbar angeordnet ist. Der Rotor 42, an welchem die erste Steckereinheit 6 festgelegt ist, ist in dieser Ansicht nicht dargestellt, siehe hierfür Fig. 5. Mit Vorteil weist der zweite Koppelbereich 82 einen als Vorsprung ausgebildeten zweiten Steckerbereich 87 auf, welcher zum Eingriff in den als Aussparung ausgebildeten ersten Steckerbereich 67 (siehe Fig. 5) dient. Dies hat den Vorteil, dass der als Vorsprung ausgebildete zweite Steckerbereich 87 auch innerhalb der Aussparung am Befestigungsbereich 84 geführt werden kann, was eine besonders einfache Konstruktion der zweiten Steckereinheit 8 möglich macht.

Fig. 3 zeigt eine Ansicht einer Kupplungsplatte 2 gemäß der vorliegenden Erfindung von unten gesehen. Mit Vorteil weist die Kupplungsplatte 2 einen Aufnahmebereich 22 auf, in welchen der Königszapfen 41 einführbar ist. Weiterhin bevorzugt weist die Kupplungsplatte 2 einen im Wesentlichen V-förmig ausgebildeten Abschnitt des Aufnahmebereiches 22 auf, in welchem V-förmig zulaufende Führungsflächen 24 vorgesehen sind. In diese Führungsflächen 24 greift die keilförmige Eingriffsgeometrie 64 der ersten Steckereinheit 6 (siehe Fig. 2) ein, wobei die erste Steckereinheit 6 gemeinsam mit dem Rotor 42 beim Einführen in den Aufnahmebereiche 22 in die richtige Drehstellung um die Drehachse D gebracht wird und sobald der Königszapfen 41 vollständig in den Aufnahmebereich 22 eingeführt ist, gegenüberliegend und korrespondierend zur zweiten Steckereinheit 8 ausgerichtet ist. Die zweite Steckereinheit 8 ist dabei wie in Fig. 3 gezeigt im Bereich der Führungsflächen 24 des Aufnahmebereiches 22 angeordnet und überbrückt und verstärkt den Aufnahmebereich 22. Der Befestigungsbereich 84 der zweiten Steckereinheit 8 ist dabei mit Flanschabschnitten versehen, welche an der Kupplungsplatte 2 verschraubt werden können. Alternativ hierzu ist es auch bevorzugt, den Befestigungsabschnitt 84 an der Kupplungsplatte 2 anzuschweißen, oder eine Kombination einer Schweiß- mit einer form- und kraftschlüssigen Verbindung herzustellen. Mit Vorteil weist die in Fig. 3 dargestellte zweite Steckereinheit 8 die bereits in den Figuren 1 und 2 dargestellten Merkmale auf.

Fig. 4 zeigt zur Verdeutlichung der Anordnung der zweiten Steckereinheit 8 eine perspektivische Ansicht der bereits in Fig. 3 gezeigten bevorzugten Ausführungsform. Dabei ist zu erkennen, dass die zweite Steckereinheit 8 im Aufnahmebereich 22 derart angeordnet ist, dass der für die Kombination aus der Sattelkupplung 2 und der zweiten Steckereinheit 8 benötigte Gesamtbauraum besonders gering ausfällt. Insbesondere erweitert die zweite Steckereinheit 8 das von dem Verbund aus Kupplungsplatte 2 und zweiter Steckereinheit 8 aufgespannte Gesamtvolumen nur unwesentlich. Insbesondere ragt dabei die zweite Steckereinheit 8 nicht nach in Figur rechts unten hin, bezogen auf die Anordnung der Sattelkupplung am Fahrzeug hinten, über die Kupplungsplatte 2 hinaus. Der zweite Koppelbereich 82 der zweiten Steckereinheit 8 ist in der in Fig. 4 dargestellten Ausführungsform in der Position dargestellt, in welcher ein Königszapfen 41 vorbei an der zweiten Steckereinheit 8 in den Aufnahmebereich 22 eingeführt werden kann.

Fig. 5 zeigt eine bevorzugte Ausführungsform einer Aufliegereinheit 4, wobei diese einen Königszapfen 41 und einen um die durch den Königszapfen 41 definierte Drehachse D drehbar angeordneten Rotor 42 aufweist. Der Rotor 42 ist dabei relativ zu den umgebenden Bereichen der Aufliegereinheit 4 angeordnet, wobei diese umgebenden Bereiche am Rahmen des Aufliegers, welcher nicht dargestellt ist, festlegbar sind. Am Rotor 42 befestigt ist die erste Steckereinheit 6, welche eine keilförmige Eingriffsgeometrie 64 aufweist, und einen Steckerbereich 67, in welchem die ersten Anschlüsse 66A und 66B vorhanden sind (siehe Fig. 1). Die ersten Anschlüsse 66A und 66B sind dabei für eine Kopplung entlang der Koppelachse K ausgebildet, wobei die Koppelachse K gemeinsam mit dem Rotor 42 um die Drehachse D drehbar angeordnet ist und parallel oder im Wesentlichen parallel zur Drehachse D ausgerichtet ist. In den als Aussparung ausgebildeten ersten Steckerbereich 67 greift der als Vorsprung ausgebildete zweite Steckerbereich 87 ein, wobei Fig. 2 den Zustand kurz bevor diesem Eingriff zeigt.

Fig. 6 offenbart eine Ansicht auf eine bevorzugte Ausführungsform des Verbindungssystems 1 aus Richtung der zweiten Steckereinheit 8 gesehen. Dabei sind die zweiten Anschlüsse 86A und 86B gezeigt, welche im zweiten Koppelbereich 22 angeordnet sind. Die in Fig. 6 gezeigte Ausführungsform weist dabei im Wesentlichen die Merkmale der bereits in den Figuren 1 und 2 gezeigten bevorzugten Ausführungsformen eines Verbindungssystems 1 auf.

### Bezugszeichen:

- 1: - Verbindungssystem
- 2: - Kupplungsplatte
- 4: - Aufliegereinheit
- 6: - erste Steckereinheit
- 8: - zweite Steckereinheit
- 22: - Aufnahmebereich
- 24: - Führungsflächen
- 41: - Königszapfen
- 42: - Rotor
- 62: - erste Koppelbereich
- 64: - Eingriffsgeometrie
- 66A: - erster elektrischer Anschluss
- 66B: - erster Fluidanschluss
- 67: - erster Steckerbereich
- 82: - zweiter Koppelbereich
- 84: - Befestigungsbereich
- 85: - Führung
- 86A: - zweiter elektrischer Anschluss
- 86B: - zweiter Fluidanschluss
- 87: - zweiter Steckerbereich
- D: - Drehachse
- K: - Koppelachse

## Patentansprüche

1. Verbindungssystem (1) für Nutzfahrzeuge,
umfassend eine erste Steckereinheit (6) und eine zweite Steckereinheit (8), wobei die erste Steckereinheit (6) zur Festlegung an einem Rotor (42) einer Aufliegereinheit (4), welcher um eine Drehachse (D) drehbar an der Aufliegereinheit (4) gelagert ist, ausgelegt ist und einen ersten Koppelbereich (62) aufweist, wobei der Rotor ein Drehteller der Aufliegereinheit (4) ist,
wobei die zweite Steckereinheit (8) zumindest einen Befestigungsbereich (84) zur Festlegung an einer Kupplungsplatte (2) eines Nutzfahrzeuges und einen zweiten Koppelbereich (82) aufweist,
wobei der erste und der zweite Koppelbereich (62, 82) dafür ausgelegt sind entlang einer Koppelachse (K) miteinander gekoppelt zu werden,
**dadurch gekennzeichnet,**
**dass** die Koppelachse (K) im Wesentlichen parallel zur Drehachse (D) und beabstandet von der Drehachse (D) verläuft, und
**dass** der erste Koppelbereich (62) relativ zum Rotor (42) und/oder der zweite Koppelbereich (82) relativ zum Befestigungsbereich (84) entlang der Koppelachse (K) verlagerbar ist/sind, um mit dem jeweils gegenüberliegenden Koppelbereich (62, 82) in oder außer Eingriff zu gelangen.

2. Verbindungssystem (1) nach Anspruch 1,
wobei die Lagerung des ersten Koppelbereichs (62) am Rotor (42) und die Lagerung des zweiten Koppelbereichs (82) am Befestigungsbereich (84) im Wesentlichen keine Verlagerung quer zur Koppelachse (K) zulassen.

3. Verbindungssystem (1) nach einem der vorhergehenden Ansprüche,
wobei die erste Steckereinheit (6) eine Vielzahl von sich parallel zur Koppelachse (K) erstreckenden ersten Anschlüssen (66A, 66B) aufweist,
wobei zumindest zwei erste elektrische Anschlüsse (66A) und zumindest zwei erste Fluidanschlüsse (66B) vorgesehen sind.

4. Verbindungssystem (1) nach einem der vorhergehenden Ansprüche,
wobei die zweite Steckereinheit (8) eine Vielzahl von sich parallel zur Koppelachse (K) erstreckenden zweiten Anschlüssen (86A, 86B) aufweist,
wobei zumindest zwei zweite elektrische Anschlüsse (86A) und zumindest zwei zweite Fluidanschlüsse (86B) vorgesehen sind.

5. Verbindungssystem (1) nach einem der vorhergehenden Ansprüche,
wobei am ersten Koppelbereich (62) und/oder am zweiten Koppelbereich (82) jeweils eine Hubeinheit angreift, welche ausgelegt ist, den jeweiligen Koppelbereich (62,82) entlang der Koppelachse (K) zu verlagern.

6. Verbindungssystem (1) nach einem der vorhergehenden Ansprüche,
wobei der Befestigungsbereich (84) der zweiten Steckereinheit (8) als Stabilisierungselement, insbesondere als Blechteil ausgebildet ist und an der Kupplungsplatte (2) stoffschlüssig und/oder formschlüssig festlegbar ist.

7. Verbindungssystem (1) nach einem der vorhergehenden Ansprüche,
wobei der Befestigungsbereich (84) eine als Aussparung ausgebildete Führung (85) aufweist, in welcher der zweite Koppelbereich (82) geführt und gegen Verlagerung quer zur Koppelachse (K) gesichert ist.

8. Verbindungssystem (1) nach einem der vorhergehenden Ansprüche,
wobei der erste Koppelbereich (62) eine keilförmige Eingriffsgeometrie (64) aufweist, welche zum Eingriff mit keilförmig zulaufenden Führungsflächen (24) eines Aufnahmebereichs (22) der Kupplungsplatte (2) ausgelegt ist,
wobei die keilförmige Eingriffsgeometrie (64) an einem einstückig mit dem ersten Koppelbereich (62) ausgeführten Bauteil ausgebildet ist.

9. Verbindungssystem (1) nach Anspruch 8,wobei die ersten Anschlüsse (66A, 66B) in einem ersten Steckerbereich (67) gehalten sind,
wobei der erste Steckerbereich (67) in einer Aussparung am ersten Koppelbereich (62) angeordnet ist,
wobei der zweite Koppelbereich (82) einen als Vorsprung ausgebildeten zweiten Steckerbereich (87) aufweist,
wobei im zusammengekoppelten Zustand der erste und der zweite Steckerbereich (67, 87) mit einer Überlappungslänge ineinander greifen, welche zumindest ein 0,3- bis 0,5-faches der größten Erstreckung der keilförmigen Eingriffsgeometrie (64) parallel zur Koppelachse (K) ist.

10. Verbindungssystem (1) nach einem der Ansprüche 8 oder 9,
wobei der erste Steckerbereich (67) und/oder der zweite Steckerbereich (87) einen, senkrecht zur Koppelachse (K) geschnitten, im Wesentlichen rechteckigen Querschnitt aufweisen.

11. Kupplungssystem, insbesondere für Nutzfahrzeuge,
aufweisend eine Kupplungsplatte (2), eine Aufliegereinheit (4) und ein Verbindungssystem (1) nach einem der Ansprüche 1 - 10,
wobei die Kupplungsplatte (2) einen Aufnahmebereich (22) mit keilförmig zulaufenden Führungsflächen (24) aufweist,
wobei die Aufliegereinheit (4) einen um eine Drehachse (D) drehbar gelagerten Rotor (42) aufweist, welcher eine exzentrisch zur Drehachse (D) angeordnete Eingriffsgeometrie (64) aufweist, wobei der Rotor ein Drehteller der Aufliegereinheit (4) ist,
wobei an der Eingriffsgeometrie (64) oder beabstandet von der Eingriffsgeometrie (64) am Rotor (42) die erste Steckereinheit (6) festgelegt ist,
wobei an der Kupplungsplatte (2) benachbart zum und/oder angrenzend an den Aufnahmebereich (22) die zweite Steckereinheit (8) festgelegt ist.

12. Kupplungssystem nach Anspruch 11,
wobei die zweite Steckereinheit (8) einen Befestigungsbereich (84) aufweist, welcher als Blechteil ausgebildet ist und an der Kupplungsplatte (2) stoffschlüssig und/oder formschlüssig festgelegt ist,
wobei der Befestigungsbereich (84) den Aufnahmebereich (22) derart überbrückt, dass er eine lokale Verstärkung der Kupplungsplatte (2) bildet.

13. Verfahren zur Verbindung eines Zugfahrzeugs mit einer Aufliegereinheit (4),
wobei das Zugfahrzeug eine Kupplungsplatte (2) und die Aufliegereinheit (4) einen um eine Drehachse (D) drehbar gelagerten Rotor (42) und einen Königszapfen (41) aufweisen,
wobei der Rotor (42) ein Drehteller der Aufliegereinheit (4) ist,
wobei am Rotor (42) eine exzentrisch zur Drehachse (D) angeordnete erste Steckereinheit (6) ausgebildet oder festgelegt ist,
wobei die Kupplungsplatte (2) einen Aufnahmebereich (22) mit keilförmig zulaufenden Führungsflächen (24) und eine zweite Steckereinheit (8) aufweist, umfassend die Schritte:
a) Verlagern der Aufliegereinheit (4) quer zur Drehachse (D) relativ zur Kupplungsplatte (2) derart, dass der Königszapfen (41) in den Aufnahmebereich (22) eingeführt wird und der Rotor (42) durch den Eingriff mit dem Aufnahmebereich (22) um die Drehachse (D) gedreht und ausgerichtet wird, wobei die erste Steckereinheit (6) in eine Stellung der zweiten Steckereinheit (8) gegenüberliegend geschwenkt wird;
b) Sichern des Königszapfens (41) im Aufnahmebereich (22) der Kupplungsplatte (2);
c) Zusammenkoppeln der ersten und der zweiten Steckereinheit (6, 8) durch Verlagern eines ersten Koppelbereiches (62) der ersten Steckereinheit (6) und/oder eines zweiten Koppelbereiches (82) der zweiten Steckereinheit (8) entlang einer im Wesentlichen parallel zur Drehachse (D) stehenden Koppelachse (K) in Richtung der jeweils gegenüberliegenden Steckereinheit (6, 8);
d) Herstellen einer zumindest bereichsweisen Überlappung der Koppelbereiche (62, 82) miteinander längs der Koppelachse (K).

14. Verfahren nach Anspruch 13,
wobei das Zusammenkoppeln der ersten und der zweiten Steckereinheit (6, 8) erst nach dem Sichern des Königszapfens (41) im Aufnahmebereich (22) erfolgt.

## Claims

1. Connecting system (1) for commercial vehicles,
comprising a first connector unit (6) and a second connector unit (8),
wherein the first plug unit (6) is designed to be fixed to a rotor (42) of a trailer unit (4), which rotor is rotatably mounted on the trailer unit (4) about an axis of rotation (D), and has a first coupling region (62), the rotor being a rotary plate of the trailer unit (4),
wherein the second connector unit (8) has at least one fastening region (84) for fixing to a coupling plate (2) of a commercial vehicle and a second coupling region (82),
wherein said first and second coupling portions (62, 82) are adapted to be coupled to each other along a coupling axis (K),
**characterized in**
**that** the coupling axis (K) is substantially parallel to the axis of rotation (D) and spaced from the axis of rotation (D), and
in that the first coupling portion (62) is/are displaceable relative to the rotor (42) and/or the second coupling portion (82) is/are displaceable relative to the mounting portion (84) along the coupling axis (K) to engage or disengage the respective opposite coupling portion (62, 82).

2. Connection system (1) according to claim 1,
wherein the mounting of the first coupling region (62) on the rotor (42) and the mounting of the second coupling region (82) on the fastening region (84) substantially do not permit any displacement transversely to the coupling axis (K).

3. A connector system (1) according to any one of the preceding claims,
wherein the first connector unit (6) comprises a plurality of first ports (66A, 66B) extending parallel to the coupling axis (K),
wherein at least two first electrical connections (66A) and at least two first fluid connections (66B) are provided.

4. A connection system (1) according to any one of the preceding claims,
wherein the second connector unit (8) comprises a plurality of second connectors (86A, 86B) extending parallel to the coupling axis (K),
wherein at least two second electrical ports (86A) and at least two second fluid ports (86B) are provided.

5. Connecting system (1) according to one of the preceding claims,
wherein a respective lifting unit engages on the first coupling region (62) and/or on the second coupling region (82), which lifting unit is designed to displace the respective coupling region (62, 82) along the coupling axis (K).

6. Connecting system (1) according to one of the preceding claims,
wherein the fastening region (84) of the second connector unit (8) is formed as a stabilising element, in particular as a sheet metal part, and can be fixed to the coupling plate (2) in a material-locking and/or form-fitting manner.

7. Connecting system (1) according to one of the preceding claims,
wherein the fastening region (84) has a guide (85) in the form of a recess in which the second coupling region (82) is guided and secured against displacement transversely to the coupling axis (K).

8. A coupling system (1) according to any one of the preceding claims,
wherein the first coupling portion (62) has a wedge-shaped engagement geometry (64) adapted to engage wedge-shaped tapered guide surfaces (24) of a receiving portion (22) of the coupling plate (2),
wherein the wedge-shaped engagement geometry (64) is formed on a component made in one piece with the first coupling region (62).

9. A connection system (1) according to claim 8, wherein the first terminals (66A, 66B) are held in a first connector portion (67),
wherein the first connector portion (67) is disposed in a recess on the first coupling portion (62),
wherein the second coupling region (82) has a second plug region (87) formed as a projection,
wherein, in the coupled state, the first and the second plug regions (67, 87) engage in one another with an overlap length which is at least 0.3 to 0.5 times the greatest extent of the wedge-shaped engagement geometry (64) parallel to the coupling axis (K).

10. A connection system (1) according to any one of claims 8 or 9,
wherein the first connector portion (67) and/or the second connector portion (87)
have a substantially rectangular cross-section when cut perpendicularly to the coupling axis (K).

11. Coupling system, in particular for commercial vehicles
comprising a coupling plate (2), a trailer unit (4) and a coupling system (1) according to one of the claims 1-10,
wherein the coupling plate (2) has a receiving region (22) with guide surfaces (24) running in a wedge shape,
wherein the support unit (4) has a rotor (42) which is mounted rotatably about an axis of rotation (D) and which has an engagement geometry (64) arranged eccentrically to the axis of rotation (D), wherein the rotor is a rotary plate of the support unit (4),
wherein the first plug unit (6) is fixed to the rotor (42) at the engagement geometry (64) or at a distance from the engagement geometry (64),
wherein the second plug unit (8) is fixed to the coupling plate (2) adjacent to and/or adjoining the receiving area (22).

12. Coupling system according to claim 11,
wherein the second plug unit (8) has a fastening region (84) which is in the form of a sheet-metal part and is fixed to the coupling plate (2) in a substance-locking and/or form-fitting manner,
the fastening region (84) bridging the receiving region (22) in such a way that it forms a local reinforcement of the coupling plate (2).

13. Method for connecting a towing vehicle to a trailer unit (4),
wherein the towing vehicle has a coupling plate (2) and the semi-trailer unit (4) has a rotor (42) mounted rotatably about an axis of rotation (D) and a king pin (41),
wherein the rotor (42) is a turntable of the support unit (4),
wherein a first plug unit (6) arranged eccentrically to the axis of rotation (D) is formed or fixed on the rotor (42),
the coupling plate (2) having a receiving region (22) with guide surfaces (24) running in a wedge shape and a second plug unit (8),
comprising the steps of:
a) displacing the support unit (4) transversely to the axis of rotation (D) relative to the coupling plate (2) in such a way that the king pin (41) is inserted into the receiving region (22) and the rotor (42) is rotated and aligned about the axis of rotation (D) by engagement with the receiving region (22), wherein the first plug unit (6) is pivoted into a position opposite the second plug unit (8);
b) securing the king pin (41) in the receiving area (22) of the coupling plate (2);
c) coupling the first and the second plug unit (6, 8) together by displacing a first coupling region (62) of the first plug unit (6) and/or a second coupling region (82) of the second plug unit (8) along a coupling axis (K) substantially parallel to the axis of rotation (D) in the direction of the respectively opposite plug unit (6, 8);
d) producing an at least partial overlap of the coupling areas (62, 82) with one another along the coupling axis (K).

14. Method according to claim 13,
wherein the first and second connector units (6, 8) are coupled together only after the king pin (41) has been secured in the receiving region (22).

## Revendications

1. Système de liaison (1) pour véhicules utilitaires,
comprenant une première unité d'enfichage (6) et une deuxième unité d'enfichage (8), la première unité d'enfichage (6) étant conçue pour être immobilisée sur un rotor (42) d'une unité de semi-remorque (4) monté sur l'unité de semi-remorque (4) de manière à pouvoir tourner autour d'un axe de rotation (D), et présentant une première zone de couplage (62), le rotor étant un plateau rotatif de l'unité de semi-remorque (4),
la deuxième unité d'enfichage (8) présentant au moins une zone de fixation (84), destinée à être immobilisée sur une plaque d'attelage (2) d'un véhicule utilitaire, et une deuxième zone de couplage (82),
la première et la deuxième zone de couplage (62, 82) étant conçues pour être couplées l'une à l'autre le long d'un axe de couplage (K),
**caractérisé en ce que**
l'axe de couplage (K) est sensiblement parallèle à l'axe de rotation (D) et espacé de l'axe de rotation (D), et
**en ce que** la première zone de couplage (62) peut être déplacée par rapport au rotor (42) et/ou la deuxième zone de couplage (82) peut être déplacée par rapport à la zone de fixation (84), le long de l'axe de couplage (K), afin de venir en prise ou hors de prise avec la zone de couplage (62, 82) respectivement opposée.

2. Système de liaison (1) selon la revendication 1,
dans lequel le montage de la première zone de couplage (62) sur le rotor (42) et le montage de la deuxième zone de couplage (82) sur la zone de fixation (84) n'autorisent sensiblement aucun déplacement transversal à l'axe de couplage (K).

3. Système de liaison (1) selon l'une des revendications précédentes,
dans lequel la première unité d'enfichage (6) présente une pluralité de premiers raccords (66A, 66B) s'étendant parallèlement à l'axe de couplage (K),
il est prévu au moins deux premiers raccords électriques (66A) et au moins deux premiers raccords de fluide (66B).

4. Système de liaison (1) selon l'une des revendications précédentes,
dans lequel la deuxième unité d'enfichage (8) présente une pluralité de deuxièmes raccords (86A, 86B) s'étendant parallèlement à l'axe de couplage (K),
il est prévu au moins deux deuxièmes raccords électriques (86A) et au moins deux deuxièmes raccords de fluide (86B).

5. Système de liaison (1) selon l'une des revendications précédentes,
dans lequel une unité de levage respective, conçue pour déplacer la zone de couplage respective (62, 82) le long de l'axe de couplage (K), s'engage sur la première zone de couplage (62) et/ou sur la deuxième zone de couplage (82).

6. Système de liaison (1) selon l'une des revendications précédentes,
dans lequel la zone de fixation (84) de la deuxième unité d'enfichage (8) est réalisée sous forme d'élément de stabilisation, en particulier sous forme de pièce en tôle, et peut être immobilisée sur la plaque d'attelage (2) par coopération de matière et/ou par coopération de forme.

7. Système de liaison (1) selon l'une des revendications précédentes,
dans lequel la zone de fixation (84) présente un guidage (85) réalisé sous forme d'évidement dans lequel la deuxième zone de couplage (82) est guidée et empêchée de se déplacer transversalement à l'axe de couplage (K).

8. Système de liaison (1) selon l'une des revendications précédentes,
dans lequel la première zone de couplage (62) présente une géométrie d'engagement (64) en forme de coin, qui est conçue pour venir en prise avec des surfaces de guidage (24) convergeant en forme de coin d'une zone de réception (22) de la plaque d'attelage (2),
la géométrie d'engagement (64) en forme de coin est formée sur un composant réalisé d'une seule pièce avec la première zone de couplage (62).

9. Système de liaison (1) selon la revendication 8,
dans lequel les premiers raccords (66A, 66B) sont maintenus dans une première zone d'enfichage (67),
la première zone d'enfichage (67) est disposée dans un évidement sur la première zone de couplage (62),
la deuxième zone de couplage (82) présente une deuxième zone d'enfichage (87) réalisée sous forme de saillie,
à l'état couplé ensemble, la première et la deuxième zone d'enfichage (67, 87) s'emboîtent l'une dans l'autre avec une longueur de chevauchement qui est au moins égale à 0,3 à 0,5 fois l'extension maximale de la géométrie d'engagement (64) en forme de coin parallèlement à l'axe de couplage (K).

10. Système de liaison (1) selon l'une des revendications 8 ou 9,
dans lequel la première zone d'enfichage (67) et/ou la deuxième zone d'enfichage (87) présente(nt) une section transversale sensiblement rectangulaire, coupée perpendiculairement à l'axe de couplage (K).

11. Système d'attelage, en particulier pour véhicules utilitaires,
comprenant une plaque d'attelage (2), une unité de semi-remorque (4) et un système de liaison (1) selon l'une des revendications 1 à 10,
dans lequel
la plaque d'attelage (2) présente une zone de réception (22) avec des surfaces de guidage (24) convergeant en forme de coin,
l'unité de semi-remorque (4) comprend un rotor (42) monté de manière à pouvoir tourner autour d'un axe de rotation (D), lequel présente une géométrie d'engagement (64) disposée excentriquement par rapport à l'axe de rotation (D), le rotor étant un plateau rotatif de l'unité de semi-remorque (4),
la première unité d'enfichage (6) est immobilisée sur la géométrie d'engagement (64) ou à une certaine distance de la géométrie d'engagement (64) sur le rotor (42),
la deuxième unité d'enfichage (8) est immobilisée sur la plaque d'attelage (2) au voisinage et/ou à proximité de la zone de réception (22).

12. Système d'attelage selon la revendication 11,
dans lequel la deuxième unité d'enfichage (8) présente une zone de fixation (84) qui est réalisée sous forme de pièce en tôle et qui est immobilisée sur la plaque d'attelage (2) par coopération de matière et/ou par coopération de forme,
la zone de fixation (84) enjambe la zone de réception (22) de manière à former un renforcement local de la plaque d'attelage (2).

13. Procédé de liaison d'un véhicule tracteur à une unité de semi-remorque (4),
dans lequel
le véhicule tracteur comprend une plaque d'attelage (2), et l'unité de semi-remorque (4) comprend un rotor (42), monté de manière à pouvoir tourner autour d'un axe de rotation (D), et un pivot central (41),
le rotor (42) est un plateau rotatif de l'unité de semi-remorque (4),
une première unité d'enfichage (6) disposée excentriquement par rapport à l'axe de rotation (D) est réalisée ou immobilisée sur le rotor (42),
la plaque d'attelage (2) présente une zone de réception (22) avec des surfaces de guidage (24) convergeant en forme de coin, et une deuxième unité d'enfichage (8),
comprenant les étapes consistant à :
a) déplacer l'unité de semi-remorque (4) transversalement à l'axe de rotation (D) par rapport à la plaque d'attelage (2) de telle sorte que le pivot central (41) est inséré dans la zone de réception (22) et que le rotor (42) est tourné autour de l'axe de rotation (D) et orienté par l'engagement avec la zone de réception (22), la première unité d'enfichage (6) étant pivotée jusque dans une position opposée à la deuxième unité d'enfichage (8) ;
b) bloquer le pivot central (41) dans la zone de réception (22) de la plaque d'attelage (2) ;
c) coupler ensemble la première et la deuxième unité d'enfichage (6, 8) par déplacement d'une première zone de couplage (62) de la première unité d'enfichage (6) et/ou d'une deuxième zone de couplage (82) de la deuxième unité d'enfichage (8) le long d'un axe de couplage (K), sensiblement parallèle à l'axe de rotation (D), dans la direction de l'unité d'enfichage (6, 8) respectivement opposée ;
d) établir un chevauchement au moins local des zones de couplage (62, 82) entre elles le long de l'axe de couplage (K).

14. Procédé selon la revendication 13,
dans lequel le couplage de la première et de la deuxième unité d'enfichage (6, 8) l'une avec l'autre ne s'effectue qu'une fois que le pivot central (41) est bloqué dans la zone de réception (22).
